# EUROPÄISCHE PATENTSCHRIFT

(11) **EP 0 792 762 B1**
(45) Veröffentlichungstag und Bekanntmachung des Hinweises auf die Patenterteilung: **05.08.1998**
(21) Anmeldenummer: 97101748.8
(22) Anmeldetag: 05.02.1997
(51) Int. Cl.: B60G 17/056

(54) **Niveauregelventil zum selbsttätigen Konstanthalten der Fahrzeughöhe eines Nutzfahrzeuges mit Luftfederung**
Load levelling valve for keeping constant the height of a commercial vehicle with pneumatic suspension
Soupape de régulation de niveau pour maintenir constante automatiquement la hauteur d'un véhicule utilitaire à suspension pneumatique

(30) Priorität: 29.02.1996 DE 19607619
(43) Veröffentlichungstag der Anmeldung: 03.09.1997
(73) Patentinhaber: GRAU GMBH, D-69123 Heidelberg (DE)
(72) Erfinder: Blanz, Roland, 69253 Heiligkreuzsteinach (DE)
(74) Vertreter: Patentanwälte Rehberg + Hüppe

(56) Entgegenhaltungen:
- DE-A- 2 318 535
- DE-A- 3 716 436
- DE-B- 1 144 125
- FR-A- 2 125 217
- PATENT ABSTRACTS OF JAPAN vol. 017, no. 008 (M-1350), 7.Januar 1993 & JP 04 238713 A (HINO MOTORS LTD), 26.August 1992,
- PATENT ABSTRACTS OF JAPAN vol. 017, no. 008 (M-1350), 7.Januar 1993 & JP 04 238712 A (HINO MOTORS LTD), 26.August 1992,

## Beschreibung

Die Erfindung bezieht sich auf ein Niveauregelventil mit den im Oberbegriff des Anspruches 1 angegebenen Merkmalen. Ein solches Niveauregelventil läßt sich allein, also ohne ein Wechselladeventil, in Verbindung mit Luftfederbälgen eines Fahrzeuges einsetzen. Es kann aber auch dann Verwendung finden, wenn ein luftgefedertes Fahrzeug vorgesehen ist, dessen Niveauhöhe über ein Wechselladeventil derart veränderbar ist, daß in der Stellung Heben das Niveauregelventil abgeschaltet ist und die dem Niveauregelventil zugeordneten Luftfederbälge parallel zum Niveauregelventil mit einer Druckluftquelle verbunden sind.

Ein Niveauregelventil der eingangs beschriebenen Art, allerdings mit Höhenbegrenzung, ist aus der DE 37 16 436 A1 bekannt. Der den Doppelventilkörper des Einlaßventils und des Auslaßventils betätigende Ventilstößel ist mit einem im Gehäuse gleitend verschiebbar gelagerten Führungsstück verbunden, welches eine Ausnehmung aufweist, in die ein Exzenternocken eines Verstelltriebes eingreift. Der Verstelltrieb weist einen Hebel, eine drehbar gelagerte Welle und den Exzenternocken auf. Zur Höhenbegrenzung ist eine hohle Steuerstange auf der dem Doppelventilkörper abgekehrten Seite mit dem Führungsstück verbunden. Die hohle Steuerstange trägt einen Entlüftungssitz, dem ein im Gehäuse federnd aufgehängter ringartiger und die Steuerstange umgebender Ventilkörper zugeordnet ist. Der Ventilkörper arbeitet andererseits mit einem gehäusefesten Einlaßsitz zusammen, so daß auf diese Weise ein Absperrventil für eine zu den Bälgen führende Leitung gebildet ist. Damit wird die maximale Fahrzeughöhe festgelegt und begrenzt. Durch die Abschlußstellung, also die Stellung, in der sowohl das Einlaßventil wie auch das Auslaßventil des Niveauregelventils geschlossen sind, ist eine Zuordnung zu der Winkelstellung des Hebels des Verstelltriebes gegeben, und zwar derart, daß im allgemeinen einer horizontalen Ausrichtung des Hebels des Verstelltriebes die Abschlußstellung einer ersten Fahrzeughöhe zugeordnet ist. Dies bedeutet also, daß das Fahrzeug während der Fahrt eine erste festgelegte Fahrzeughöhe einnimmt, in der der Hebel des Verstelltriebes horizontal ausgerichtet ist und an dem Einlaß- und Auslaßventil die Abschlußstellung erreicht ist, so daß die Luftfederbälge weder be- noch entlüftet werden, sondern das Fahrgestell in der vorgesehenen Fahrzeughöhe tragen. Oft ist es sinnvoll, neben dieser ersten Fahrzeughöhe eine zweite, von der ersten Fahrzeughöhe abweichende Fahrzeughöhe einstellen zu können. Dies kann der Fall sein, um die Neigung eines Sattelaufliegers bei unterschiedlich hohen Aufsetzpunkten an Zugfahrzeugen zu korrigieren. Eine andere Möglichkeit besteht darin, bei Bussen den Fahrzeugaufbau in eine zweite fest vorgegebene Fahrzeughöhe abzusenken, um den Einstieg von Personen zu erleichtern. Eine dritte Möglichkeit kann sinnvoll sein, um in der zweiten Fahrzeughöhe einen vergleichsweise reduzierten Luftwiderstand zu erhalten. Aus Fig. 4 der DE 37 16 436 A1 ist ein Niveauregelventil bekannt, mit dem wahlweise eine erste und eine zweite Fahrzeughöhe ansteuerbar sind. Zu diesem Zweck ist die Ausnehmung in dem Führungsstück, in welche der Nocken des Verstelltriebes eingreift, mit entsprechend großem Spiel versehen, so daß der Nocken einmal auf der einen und zum anderen auf der anderen Seite der Ausnehmung in dem Führungsstück zur Anlage kommen kann. Dies entspricht den beiden unterschiedlichen Fahrzeughöhen. Um die beiden Fahrzeughöhen wahlweise anzusteuern, ist mit dem Führungsstück und der sich nach unten erstreckenden Steuerstange ein Steuerkolben fest verbunden, dem eine belüftbare Steuerkammer zugeordnet ist, die im Gehäuse des Niveauregelventils gebildet wird. Die belüftete Stellung des Steuerkolbens entspricht dabei der zweiten Fahrzeughöhe, während die erste Fahrzeughöhe über am Ventilstößel angreifende Federn erreicht wird, wenn die Steuerkammer nicht belüftet wird. Nachteilig hieran ist, daß der Steuerkolben bei Belüftung der Steuerkammer kraftmäßig auf das Führungsstück einwirkt und somit bei der eingestellten zweiten Fahrzeughöhe den Verstelltrieb kraftmäßig belastet. Insbesondere der in die Ausnehmung des Führungsstückes eingreifende Exzenternocken unterliegt einem hohen Verschleiß, der die Lebensdauer des Niveauregelventiles verkürzt. Weiterhin wirkt sich die Höhenbegrenzung in Verbindung mit den beiden einstellbaren Fahrzeughöhen dahingehend negativ aus, daß die Höhenbegrenzung bei der ersten eingestellten Fahrzeughöhe eine andere Wirkung erbringt als bei der zweiten eingestellten Fahrzeughöhe. Wenn die zweite Fahrzeughöhe höher als die erste Fahrzeughöhe liegend vorgesehen ist, muß der bis zu den Anschlägen der Luftfederbälge möglich maximale Hub des Fahrzeugaufbaus der Einstellung der zweiten Fahrzeughöhe zugeordnet werden. Damit aber wird die Höhenbegrenzung bei Einstellung der ersten Fahrzeughöhe früher wirksam, d. h. der maximale Hub kann für die erste Fahrzeughöhe nicht ausgenutzt werden.

Aus der DE 23 18 535 A1 ist ein Niveauregelventil einer anderen Bauart bekannt, bei der die Welle des Verstelltriebes verlängert ist und in paralleler Anordnung zu dem Ventilstößel für das Ein- und Auslaßventil weitere Elemente vorgesehen sind, beispielsweise ein zweites großquerschnittiges Auslaßventil. Auch Niveauregelventile dieser Bauart lassen sich mit einer Höhenbegrenzung versehen. Andererseits ist auch die Einstellung einer zweiten Fahrzeughöhe möglich. Die wahlweise Einstellung von zwei unterschiedlichen Fahrzeughöhen wird dabei auch als Nullpunktverstellung bezeichnet. Diese Nullpunktverstellung wird ähnlich wie bei Fig. 4 der DE 37 16 436 A1 dadurch verwirklicht, daß zwischen dem Exzenternocken des Verstelltriebes und der Ausnehmung im Führungsstück ein relativ großes Spiel vorgesehen ist, welches beim Wechsel der beiden Fahrzeughöhen überbrückt wird.

Der Erfindung liegt die Aufgabe zugrunde, ein Niveauregelventil der eingangs beschriebenen Art derart weiterzubilden, daß mit ihm wahlweise zwei Fahrzeughöhen einstellbar sind und trotzdem der die Lebensdauer des Niveauregelventils beeinträchtigende Verschleiß im verstelltrieb, insbesondere am Exzenternocken, reduziert ist.

Erfindungsgemäß wird dies bei einem Niveauregelventil der eingangs beschriebenen Art dadurch erreicht, daß die Steuerkammer in dem Führungsstück des Verstelltriebes angeordnet ist, daß der Steuerkolben in dem Führungsstück abgedichtet und begrenzt verschiebbar gelagert ist, so daß bei Einsteuerung auch der zweiten Fahrzeughöhe der Exzenternocken des Verstelltriebes von einer über den Steuerkolben ausgeübten Stellkraft unbelastet bleibt, und daß der Ventilstößel an dem Steuerkolben abgestützt ist und durch seine Relativbewegung gegenüber dem Führungsstück des Verstelltriebes die Ansteuerung der Zweiten Fahrzeughöhe zuläßt, ohne den Exzenternocken des Verstelltriebes durch die auf den Steuerkolben ausgeübte Stellkraft zu belasten und daß sich der in Richtung des Führungsstücks des Verstelltriebes vorgespannte Ventilstößel an dem Steuerkolben abstützt.

Die Steuerkammer wird damit nicht mehr im Gehäuse des Niveauregelventils gebildet, sondern in einem Teil, welches sich mit dem Ventilstößel mitbewegt bzw. über den Verstelltrieb mitbewegt wird. Besonders sinnvoll ist es, die Steuerkammer in dem Führungsstück oder in einem mit dem Führungsstück verbindbaren oder in Verbindung stehenden Teil einzurichten und den Steuerkolben gleichsam gefesselt in dem Führungsstück oder einem mit dem Führungsstück in Verbindung stehenden Teil aufzunehmen, damit bei Belüftung der Steuerkammer die von dem Steuerkolben ausgeübte Stellkraft von dem Führungsstück aufgenommen wird und insoweit der Exzenternocken des Verstelltriebes von dieser Stellkraft unbelastet bleibt. Mit der Erfindung bekommt gleichsam der Ventilstößel wirkungsmäßig zwei unterschiedliche Längen, wobei die eine Länge der ersten Fahrzeughöhe und die andere Länge der zweiten Fahrzeughöhe zugeordnet ist. In der Verbindung zwischen dem Stelltrieb und dem Führungsstück findet keine Veränderung statt, d. h. der Exzenternocken ist in dem Führungsstück in gleicher Weise abgestützt, unabhängig davon, ob die erste oder die zweite Fahrzeughöhe eingestellt ist. Die Belastung des Exzenternockens entspricht daher nur einer vergleichsweise geringen Anpreßkraft über eine Federanordnung, so daß der Verschleiß am Verstelltrieb, insbesondere am Exzenternocken, erheblich reduziert und damit die Lebensdauer des Niveauregelventils in einen vertretbaren Bereich verlängert ist. Die Erfindung läßt sich unabhängig davon anwenden, ob die zweite Fahrzeughöhe höher oder tiefer als die erste Fahrzeughöhe gewählt worden ist. Je nach dem, welche Stellung als erste und welche Stellung als zweite Fahrzeughöhe bezeichnet wird, ändert sich allenfalls die Laufrichtung des Steuerkolbens bei Beaufschlagung der Steuerkammer relativ zu dem Ein- und Auslaßventil des Niveauregelventils. Die Erfindung läßt auch ohne weiteres bauliche Vereinfachungen zu. So kann das ohnehin vorhandene Führungsstück zur Ausbildung und Unterbringung der Steuerkammer genutzt werden. Der Ventilstößel kann ein- oder mehrteilig ausgebildet sein, das Führungsstück ganz oder teilweise durchdringen oder sogar zusammen mit dem Steuerkolben eine Baueinheit bilden. Die Erfindung läßt die Weiterbildung des Niveauregelventils in ein Niveauregelventil mit Höhenbegrenzung zu.

In einer bevorzugten Ausführungsform ist das Führungsstück des Verstelltriebes nach der dem Einlaßsitz abgekehrten Seite verlängert und zu einer Hülse ausgeformt, wobei der Steuerkolben in der Hülse gelagert ist. Obwohl an sich der Steuerkolben und die Steuerkammer auch im Bereich des Ventilstößels gebildet sein könnten, und zwar auch ohne kraftmäßige Belastung des Exzenternockens über die Stellkraft des Steuerkolbens, ist die Anordnung der Steuerkammer und des Steuerkolbens in einer Hülse am Führungsstück auf der anderen Seite des Einlaßsitzes sinnvoll. Während der Ventilstößel nur einen vergleichsweise kleinen Außendurchmesser besitzt, kann die Hülse an dem Führungsstück ohne weiteres in radialer Richtung vergrößert sein, so daß eine entsprechende Wirkfläche an dem Steuerkolben gebildet werden kann. Dies ist sogar trotz Anordnung einer Steuerstange für eine Höhenbegrenzung möglich. Die Hülse und das Führungsstück können auch durchaus einteilig ausgebildet sein. Aus Montagegründen wird jedoch eine zweiteilige, zusammenfügbare Ausführung bevorzugt.

Die Hülse weist einen den Hub des Steuerkolbens in der Hülse festlegenden Deckel auf. In Verbindung mit der Anordnung des Deckels an der Hülse wird damit der mögliche Hub des eingeschlossenen Steuerkolbens begrenzt, wobei die eine Endstellung der ersten Fahrzeughöhe und die andere Endstellung des Steuerkolbens der zweiten Fahrzeughöhe zugeordnet ist. Es versteht sich, daß eine abgedichtete Druckluftzufuhr zu der dann in der Hülse gebildeten Steuerkammer möglich sein muß. Dies bereitet jedoch keine Schwierigkeiten. Die Anordnung von Dichtungsringen auf dem Außenumfang der im Gehäuse gleitenden Hülse ist ohne weiteres möglich.

Wenn der Deckel über ein Gewinde in der Hülse verstellbar und damit der Hub des Steuerkolbens für die Einsteuerung der beiden Fahrzeughöhen einstellbar ist, wird gleichsam ein Universal-Niveauregelventil geschaffen, bei dem die relative Lage der zweiten Fahrzeughöhe zu der ersten Fahrzeughöhe einstellbar ist. Das Niveauregelventil kann dann für unterschiedliche Anwendungsfälle eingestellt werden. Damit ergibt sich beispielsweise die Möglichkeit, die Differenz zwischen den beiden Fahrzeughöhen auf einen gewünschten Wert von z. B. 5 oder 10 cm einzustellen.

Zwischen Steuerkolben und Ventilstößel kann eine Stellschraube zum Einstellen der Abschlußstellung der beiden Fahrzeughöhen vorgesehen sein. Von der Seite des das Einlaßventil und das Auslaßventil mitbildenden Doppelventilkörpers aus gesehen gibt es nur eine einzige Abschlußstellung, in der sowohl das Einlaßventil wie auch das Auslaßventil geschlossen sind. Daran ändern auch die zwei einstellbaren Fahrzeughöhen nichts. Dieser einen Abschlußstellung sind wirkungsmäßig zwei unterschiedliche Längen des Ventilstößels zugeordnet, die die beiden Fahrzeughöhen repräsentieren, wobei der Verstelltrieb und insbesondere der an der Fahrzeugachse angelenkte Hebel je nach der eingestellten Fahrzeughöhe eine unterschiedliche Winkelstellung einnimmt.

Der Steuerkolben und der Ventilstößel können auch eine Baueinheit bilden, insbesondere einstückig ausgebildet sein. Die Einstellung der Abschlußstellung, also die Zuordnung der Abschlußstellung zu einer bestimmten Winkellage des Hebels des Verstelltriebes, muß dann auf andere Weise realisiert werden.

Das neue Niveauregelventil läßt auch ohne weiteres die Realisierung einer Höhenbegrenzung zu. Hierzu ist eine mit dem Führungsstück verbundene hohle Steuerstange vorgesehen, die einen Entlüftungssitz trägt, dem ein ringartiger, die Steuerstange umgebender federnd aufgehängter Ventilkörper zugeordnet ist. Diese Elemente sind an sich bekannt, werden aber hier in einem anderen und neuen Zusammenhang angewendet, nämlich in Verbindung mit einem wirkungsmäßig zwei Längen aufweisenden Ventilstößel und ohne nennenswertes Spiel zwischen Exzenternocken und Führungsstück. Damit ergibt sich überraschenderweise der wesentliche Vorteil, daß die Wirkung der Höhenbegrenzung in beiden wahlweise einstellbaren Fahrzeughöhen gleich ist, also der maximal mögliche Hub in den Luftfederbälgen bis zu den entsprechenden Anschlägen bei beiden einstellbaren Fahrzeughöhen voll genutzt werden kann. Wesentlich ist dabei, daß die hohle Steuerstange, die die Höhenbegrenzung steuert, mit dem Führungsstück, nicht aber mit dem Steuerkolben verbunden ist.

Zur Vermeidung einer Hysterese der Höhenbegrenzung kann ein im Gehäuse federnd aufgehängter Doppelventilkörper vorgesehen sein, der mit einem gehäusefesten Einlaßsitz ein Absperrventil für eine zu den Luftfederbälgen führende Leitung und mit dem Ventilkörper ein Vorsteuerventil bildet. Damit ist es möglich, nach Durchfahren einer Höhenbegrenzung und einer Entlüftung der zu den Bälgen führenden Leitung nur eine vergleichsweise kleine Ringfläche zwischen dem Entlüftungssitz und einem weiteren Sitz zwischen Doppelventilkörper und Ventilkörper zu nutzen, um beim Verlassen der Höhenbegrenzung das Einlaßventil zwischen Einlaßsitz und Doppelventilkörper zu entlasten und nachfolgend zu öffnen.

Die axiale Lage des Entlüftungssitzes und damit die gemeinsame Höhenbegrenzung kann relativ zu der Steuerstange über ein Gewinde einstellbar sein. Zwischen hohler Steuerstange und Entlüftungssitz ist insoweit ein Gewinde vorgesehen, so daß die relative Lage des Entlüftungssitzes zu dem Einlaßsitz einstellbar ist. Damit wird der Winkel des Hebels des Verstelltriebes eingestellt, bei dessen Überschreitung die Höhenbegrenzung wirksam wird.

Zwischen dem Führungsstück und der Hülse kann eine Gewindeverbindung vorgesehen sein, wobei die Steuerstange mit dem Deckel und der Hülse drehfest verbunden ist. Da das Führungsstück über den Exzenternocken des Verstelltriebes ohnehin an einer Drehung um seine Achse gehindert ist, besteht somit die Möglichkeit, die einzige Abschlußstellung den beiden Winkellagen des Hebels des Verstelltriebes in den beiden Fahrzeughöhen zuzuordnen, wobei beispielsweise eine dieser beiden Winkellagen als horizontal ausgerichtete Stellung zu dem mit vertikaler Achse montierten Gehäuse des Niveauregelventils zugeordnet werden kann.

Die Erfindung wird anhand verschiedener Ausführungsbeispiele weiter erläutert und beschrieben. Es zeigen:
- Fig. 1: einen Querschnitt durch eine erste Ausführungsform des Niveauregelventils mit zwei ansteuerbaren Fahrzeughöhen,
- Fig. 2: einen Querschnitt durch ein ganz ähnlich wie Fig. 1 aufgebautes Niveauregelventil, bei dem jedoch die zweite Fahrzeughöhe unterhalb der ersten Fahrzeughöhe liegt,
- Fig. 3: eine weitere Ausführungsform des Niveauregelventils mit einstellbarer Differenz zwischen den beiden Fahrzeughöhen,
- Fig. 4: ein Niveauregelventil mit Höhenbegrenzung und einstellbarer Abschlußstellung,
- Fig. 5: eine Detaildarstellung des Niveauregelventils gemäß Fig. 4 zur Verdeutlichung eines Vorsteuerventils in der Höhenbegrenzung und
- Fig. 6: einen Schnitt durch ein Niveauregelventil mit Höhenbegrenzung, wie in Fig. 4 gezeigt, jedoch mit einem nachgeschalteten Schnellöseventil.

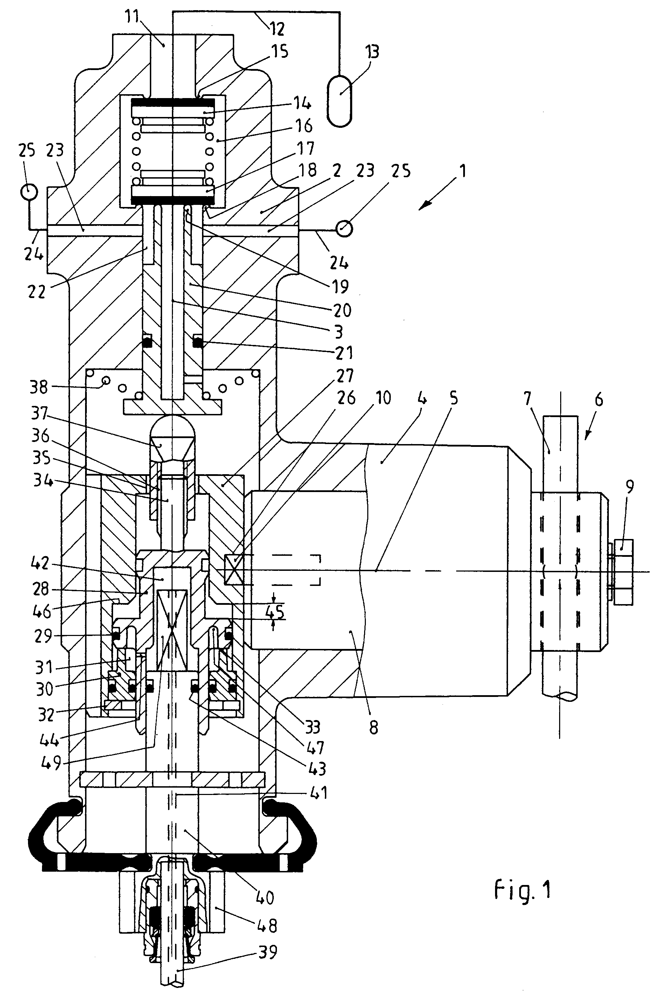

Das in Fig. 1 dargestellte Niveauregelventil 1 weist ein Gehäuse 2 auf, welches eine Achse 3 besitzt, zu der fluchtend wesentliche Elemente des Niveauregelventils 1 angeordnet sind. Das Gehäuse 2 besitzt einen Fortsatz 4, dessen Achse 5 rechtwinklig zu der Achse 3 angeordnet ist und zur Unterbringung wesentlicher Elemente eines Verstelltriebes 6 dient. Der Verstelltrieb 6 weist einen nur teilweise dargestellten Hebel 7 auf, der mit seinem einen Ende in eine radiale Bohrung einer Welle 8 eingesteckt und über eine Befestigungsschraube 9 fixiert ist. Das nicht dargestellte andere Ende des Hebels 7 ist mit der Fahrzeugachse verbunden, während das Gehäuse 2 in der Regel mit senkrecht angeordneter Achse 3 mit dem Fahrgestell verbunden ist. Aber auch die umgekehrte Anordnung ist denkbar. Zum Verstelltrieb 6 gehört schließlich noch ein Exzenternocken 10, der exzentrisch in der einen Stirnfläche der Welle 8 sitzt.

Am Gehäuse 2 ist ein Anschluß 11 für eine Leitung 12 vorgesehen, über den unter Druck stehende Vorratsluft aus einem Vorratsbehälter 13 ansteht. Zwischen einem Ventilkörper 14 und einem Gehäuserand 15 ist ein Einströmventil 14, 15 gebildet, so daß in einer Vorratskammer 16 im Gehäuse 2 Vorratsluft ansteht. In der Vorratskammer 16 ist ein Doppelventilkörper 17 vorgesehen, der mit einem gehäuseseitigen Einlaßsitz 18 ein Einlaßventil 17, 18 bildet. Dem Doppelventilkörper 17 ist weiterhin ein Auslaßsitz 19 an einem Ventilstößel 20 zugeordnet, so daß hier ein Auslaßventil 17, 19 gebildet ist. Das Niveauregelventil 1 ist in der Abschlußstellung dargestellt, d. h. sowohl das Einlaßventil 17, 18 wie auch das Auslaßventil 17, 19 sind geschlossen.

Der Ventilstößel 20 ist mit Hilfe einer Dichtung 21 gleitend und dichtend im Gehäuse 2 des Niveauregelventils 1 verschiebbar gelagert. Die Dichtung 21 begrenzt gleichzeitig eine Einströmkammer 22, die um den Stößel 20 zwischen dem Doppelventilkörper 17 und der Dichtung 21 gebildet ist. Mit der Einströmkammer stehen über radiale Kanäle 23 Leitungen 24 in Verbindung, die jeweils zu Luftfederbälgen 25, beispielsweise der rechten und der linken Fahrzeugseite zugeordnet, führen.

Der Verstelltrieb 6 greift mit seinem Exzenternocken 10 in eine schlitzartige Ausnehmung 26 eines Führungsstückes 27 ein, welches fluchtend zu der Achse 3 des Gehäuses 2 gleitend verschiebbar gelagert ist, so daß bei einer Drehbewegung des Verstelltriebes 6 um die Achse 5 die rotatorische Bewegung des Exzenternockens 10 in eine translatorische Bewegung des Führungsstückes 27 in Richtung der Achse 3 umgeformt wird.

Im Führungsstück 27 ist ein Steuerkolben 28 mit einer Dichtung 29 begrenzt gleitend verschiebbar gelagert. Das Führungsstück 27 ist weiterhin mit einem Deckel 30 versehen, der zwei Dichtungen trägt, über die einerseits eine Steuerkammer 31 zwischen Deckel 30 und Führungsstück 27 und andererseits zwischen Deckel 30 und einem Fortsatz des Steuerkolbens 28 abgedichtet wird. Der Deckel 30 ist über einen Sicherungsring 32 im Führungsstück 27 ortsfest festgelegt und bildet einen ersten Anschlag 33 für den Steuerkolben 28, der den Hub des Steuerkolbens 28 relativ zu dem Führungsstück 27 in der einen Endstellung begrenzt. Der Steuerkolben 28 nimmt die in Fig. 1 dargestellte eine Endlage dann ein, wenn die Steuerkammer 31 nicht beaufschlagt ist. Dies entspricht der ersten eingestellten Fahrzeughöhe. Der Steuerkolben 28 durchsetzt mit einem Schraubenschaft 34 eine Durchbrechung 35 des Führungsstückes 27. Über eine Gewindeverbindung 36 ist eine Stellschraube 37 auf den Schraubenschaft 34 aufgeschraubt, deren nach oben ragender Kopf an dem Ventilstößel 20 anliegt. Der Ventilstößel 20 ist zu Entlüftungszwecken hohl ausgebildet und wird von einer schwach dimensionierten Feder 38 kraftmäßig nach unten belastet, so daß letztendlich auch der Steuerkolben 28 an dem Anschlag 33 des Deckels 30 in Anlage gehalten ist. Durch ein Verdrehen der Stellschraube 37, die auch als Bestandteil des Ventilstößels 20 angesehen werden kann, ändert sich gleichsam die wirksame Länge des Ventilstößels 20, wodurch es möglich ist, eine bestimmte Winkelstellung des Hebels 7 des Verstelltriebes 6 relativ zu der Abschlußstellung bei geschlossenem Einlaßventil 17, 18 und geschlossenem Auslaßventil 17, 19 einzustellen. Die Einstellung über die Stellschraube 37 kann beispielsweise derart vorgenommen werden, daß dieser dargestellten Stellung entsprechend der ersten Fahrzeughöhe eine horizontale Lage des Hebels 7 relativ zu einer senkrecht angeordneten Achse 3 des Gehäuses 2 des Niveauregelventils 1 zugeordnet ist.

Zum Einsteuern einer zweiten Fahrzeughöhe ist die Steuerkammer 31 auf dem Führungsstück 27 belüftbar. Eine Leitung 39 ist an einen Einsatz 40 angeschlossen, der einen axialen Kanal 41 besitzt und in einer Kammer 42 im Steuerkolben 28 endet. Eine Dichtung 43 zwischen Einsatz 40 und Steuerkolben 28 dichtet die Kammer 42 nach außen ab. Die Kammer 42 steht über eine Bohrung 44 mit der Steuerkammer 31 in Verbindung.

Bei Belüftung der Steuerkammer 31 führt der Steuerkolben 28 relativ zum Führungsstück 27 einen Hub 45 aus und legt sich damit an einen Anschlag 46 des Führungsstücks 27 an. Mit dieser Druckbeaufschlagung der Steuerkammer 31 und der nach oben gerichteten Wirkfläche 47 des Steuerkolbens 28 wird gleichsam die wirksame Länge des Ventilstößels 20 verändert und die Ansteuerung der zweiten Fahrgestellhöhe eingeleitet. Durch die Anlage des Steuerkolbens 28 an dem Anschlag 46 wird vermittels der Wirkfläche 47 zwar eine Stellkraft ausgeübt. Diese wird jedoch über den Anschlag 46 unmittelbar von dem Führungsstück 27 aufgenommen und nicht an den Exzenternocken 10 weitergegeben. Der Exzenternocken 10 wird also von dieser Stellkraft nicht belastet, so daß sein Verschleiß in der Ausnehmung 26 des Führungsstücks 27 erheblich reduziert ist. Auf den Exzenternocken 10 wirkt nur die relativ kleine Kraft der Feder 38 ein, wodurch der Verschleiß an dem Exzenternocken 10 in vertretbaren Grenzen gehalten wird.

Mit der Einstellung der zweiten Fahrzeughöhe durch Belüftung der Steuerkammer 31 wird sich eine gegenläufige Bewegung abspielen, indem zunächst bei gegenüber der ersten eingestellten Fahrzeughöhe unveränderter Relativlage des Verstelltriebes der Stößel 20 nach oben bewegt wird, so daß über das geschlossene Auslaßventil 17, 19 das Einlaßventil 17, 18 geöffnet wird. Damit strömt Druckluft aus der Vorratskammer 16 in die Luftfederbälge 25, und der Fahrzeugaufbau wird gegenüber der Fahrzeugachse angehoben. Durch diese Anhebung ändert sich die Winkelstellung des Hebels 7 des Verstelltriebes 6, und zwar in der Richtung, die ein Öffnen des Auslaßventiles 17, 19 verlangen würde. Das Auslaßventil 17, 19 bleibt jedoch weiterhin geschlossen. Lediglich die Öffnung des Einlaßventiles 17, 18 verringert sich, bis schließlich auch das Einlaßventil 17, 18 schließt und damit wiederum eine Abschlußstellung erreicht ist. Diese Abschlußstellung ist, was die Relativlage des Doppelventilkörpers 17 und des Einlaßsitzes 18 und des Auslaßsitzes 19 anbetrifft, die gleiche Relativlage wie bei der eingestellten ersten Fahrzeughöhe, jetzt aber zugeordnet einer zweiten Fahrzeughöhe. Es erscheint daher sinnvoll, von einer einzigen Abschlußstellung zu sprechen trotz zweier in unterschiedlicher Weise einstellbarer Fahrzeughöhen. Es versteht sich, daß infolge der wirkungsmäßig veränderten Länge des Ventilstößels 20 zwischen den beiden Fahrzeughöhen die relative Winkellage des Hebels 7 des Verstelltriebes 6 in der zweiten Fahrzeughöhe eine andere ist als in der ersten Fahrzeughöhe.

Zur Verstellung der Stellschraube 37 von außen ist der Einsatz 40 im Gehäuse 2 des Niveauregelventils 1 über einen Mehrkantansatz 48 verdrehbar gelagert. Das obere Ende des Einsatzes 40 weist einen weiteren Mehrkantansatz 49 auf, der in eine entsprechende Gegenfläche an dem Steuerkolben 28 eingreift, so daß bei einer Verdrehung des Einsatzes 40 von außen auch der Steuerkolben 28 in dem Führungsstück 27 verdreht wird. Das Führungsstück 27 ist durch den in seine Ausnehmung 26 einragenden Exzenternocken 10 an einer Verdrehung um die Achse 3 gehindert. Über die mehrkantig ausgebildete Durchbrechung 35 und eine entsprechende äußere Oberfläche der Stellschraube 37 kann die Stellschraube 37 ebenfalls an einer Verdrehung gehindert sein, so daß es möglich ist, durch Betätigung des Mehrkantansatzes 48 von außen die Gewindeverbindung 36 zu verstellen, also damit die wirksame Länge des Ventilstößels 20 zu verändern. Diese Veränderung bzw. Einstellung dient einer Zuordnung der beiden relativen Winkelstellungen des Hebels 7 zu der gemeinsamen Abschlußstellung.

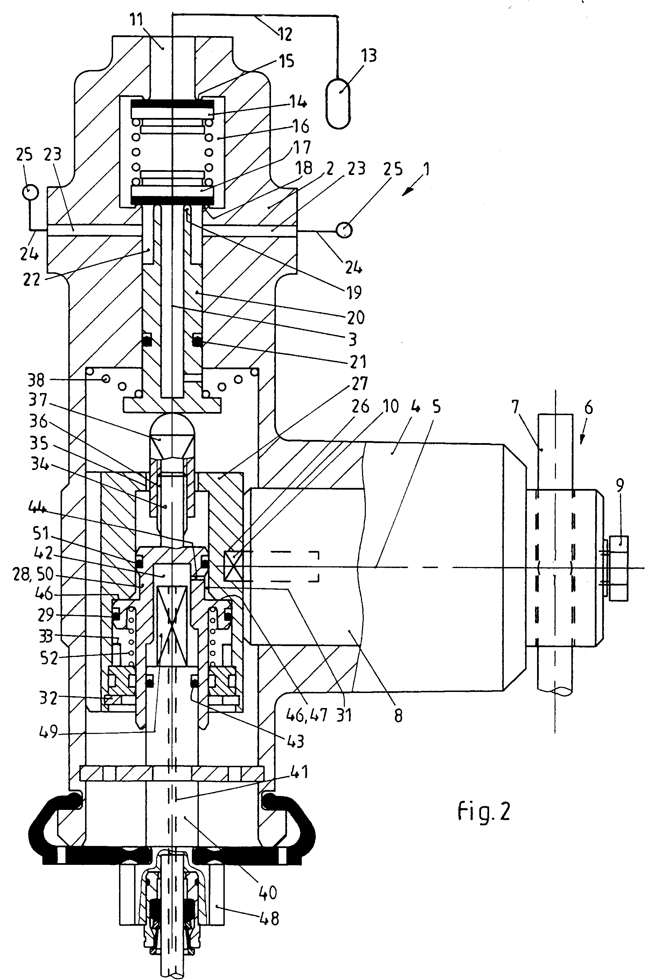

Fig. 2 zeigt eine zweite Ausführungsform des Niveauregelventils, welches in seinen Einzelheiten auf die Ausführungsform der Fig. 1 zurückgreift, auf deren Beschreibung diesbezüglich verwiesen werden kann. Der einzige Unterschied besteht darin, daß die Steuerkammer 31 an anderer Stelle angeordnet ist und die Wirkfläche 47 nach unten wirkt, woraus erkennbar wird, daß die zweite Fahrzeughöhe tiefer als die erste Fahrzeughöhe angeordnet ist, während sie bei dem Ausführungsbeispiel der Fig. 1 höher als die erste Fahrzeughöhe angeordnet war. In beiden Fällen wird ein und derselbe Stufenkolben 50 als Steuerkolben 28 eingesetzt. Zur Festlegung der Steuerkammer 31 ist eine weitere Dichtung 51 in eine in Fig. 1 nicht mit einer Dichtung besetzten Nut eingelegt. Die beiden Dichtungen des Deckels erweisen sich als überflüssig bzw. hinderlich. Die Bohrung 44 am Steuerkolben 28 wird hier an anderer Stelle plaziert, und zwar derart, daß sie zwischen den Dichtungen 29 und 51 in die Steuerkammer 31 mündet. Zwischen Deckel 30 und Steuerkolben 28 befindet sich eine Feder 52, die in ihrer Kraft lediglich größer als die Kraft der Feder 38 ausgebildet sein muß, derart, daß der Steuerkolben 28 bei unbelüfteter Steuerkammer 31, also zur Einstellung der ersten Fahrzeughöhe, an dem Anschlag 46 des Führungsstückes 27 anliegt. Bei Beaufschlagung der Steuerkammer 31 fährt dagegen der Steuerkolben 28 nach unten, so daß er an den Anschlägen 33 auf Rippen am Deckel 30 zur Anlage kommt, wodurch wirkungsmäßig die Länge des Ventilstößels 20 verringert und letztendlich die zweite Fahrzeughöhe eingestellt wird, die hier unterhalb der ersten Fahrzeughöhe liegt, so daß also der Fahrzeugaufbau vergleichsweise abgesenkt worden ist.

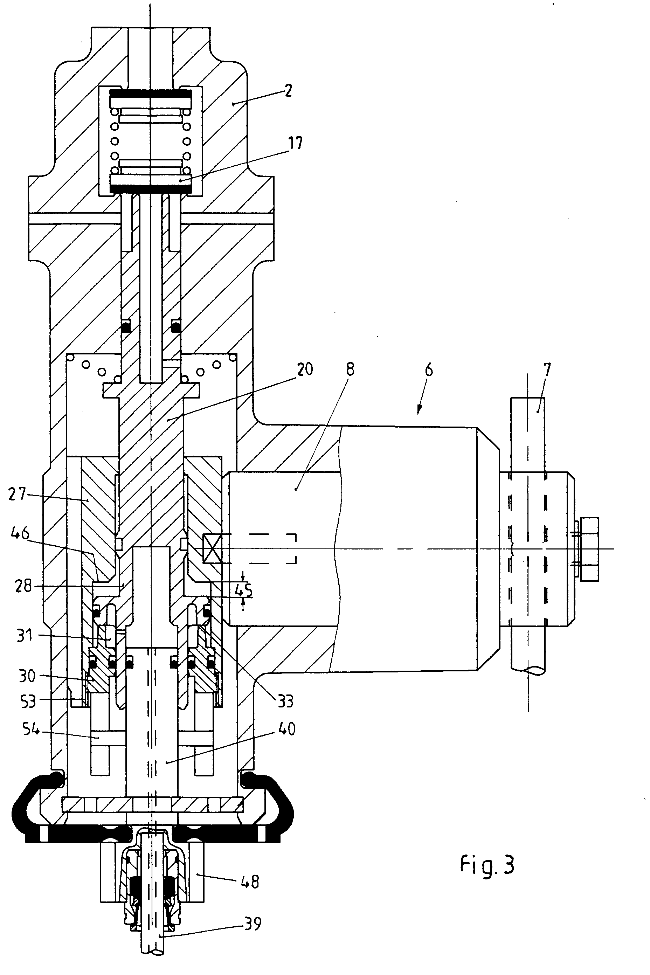

Fig. 3 zeigt weitere Möglichkeiten auf. Es ist zunächst erkennbar, daß der Ventilstößel 20 und der Steuerkolben 28 als eine Baueinheit einstückig ausgebildet werden können. Der Ventilstößel 20 durchsetzt damit gleichsam das Führungsstück 27. Außerdem ist der Deckel 30 nicht ortsfest am Führungsstück 27 durch einen Sicherungsring 32 abgestützt, sondern über ein Gewinde 53 relativ zum Führungsstück 27 verstellbar. Die Verdrehung des Deckels 30 relativ zu dem Führungsstück 27 wird auch hier über den Mehrkantansatz 48 an dem Einsatz 40, jetzt aber auf den Deckel 30, übertragen. Eine Gabel 54 stellt die drehfeste Verbindung zwischen dem Einsatz 40 und dem Deckel 30 her. Damit kann der zulässige Hub 45 zwischen den Anschlägen 33 und 46 des Steuerkolbens 28 eingestellt werden, der proportional zu der Differenz zwischen den beiden Fahrzeughöhen ist. Letztlich kann damit die zweite Fahrzeughöhe relativ zur ersten Fahrzeughöhe eingestellt werden.

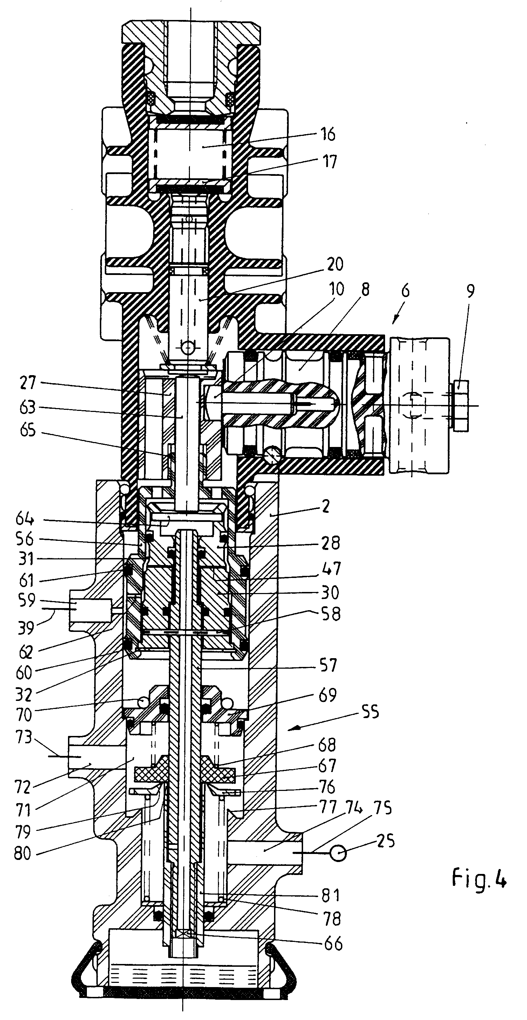

Fig. 4 zeigt einen Schnitt durch ein Niveauregelventil 1 mit Höhenbegrenzung in einer mehr konstruktiven Ausbildung. Das Niveauregelventil 1 weist zusätzlich eine Höhenbegrenzung 55 auf. Das Führungsstück 27 ist hier zu einer Hülse 56 verlängert und zur Unterbringung des Steuerkolbens 28 auch radial erweitert. Der Deckel 30 ist mit Hilfe des Sicherungsrings 32 und mit mehrkantigem Umriß verdrehgesichert in der Hülse 56 untergebracht. Die Wirkfläche 47 des Steuerkolbens 28 ist wie in Fig. 1 nach oben gerichtet. Eine zu Entlüftungszwecken hohle Steuerstange 57 gehört zur Ansteuerung der Höhenbegrenzung 55. Die Steuerstange 57 ist am Deckel 30, nicht aber am Steuerkolben 28 aufgehängt. Hierzu dient ein Querbolzen 58. Die Leitung 39 für die Belüftung der Steuerkammer 31 ist hier an einem Anschluß 59 seitlich am Gehäuse 2 verwirklicht. Die Hülse 56 besitzt zwei Dichtungen 60 und 61, um die Luftzuführung zu der Steuerkammer 31 über eine Bohrung 62 in der Hülse 56 trotz Bewegung der Hülse 56 zusammen mit dem Führungsstück 27 zu ermöglichen. Der Ventilstößel 20 ist hier unterteilt, wobei ein Stößelteil 63 das Führungsstück 27 durchsetzt, dessen unteres Ende über einen Stift 64, der den Steuerkolben 28 durchsetzt, abgestützt ist. Es versteht sich, daß der Stößel 20 und der Stößelteil 63 auch einstückig ausgebildet sein könnten. Auch das Führungsstück 27 könnte mit der Hülse 56 einstückig ausgebildet sein. Gemäß Fig. 4 ist jedoch zwischen dem Führungsstück 27 und der Hülse 56 eine Gewindeverbindung 65 vorgesehen, der eine ähnliche Einstellfunktion wie die Gewindeverbindung 36 bei den Ausführungsbeispielen der Fig. 1 und 2 zukommt. Auch hier ist die Einstellung der Abschlußstellung zu den beiden Fahrzeughöhen möglich. Die Einstellung mittels der Gewindeverbindung 65 geschieht durch Verdrehen der hohlen Steuerstange 57 mittels eines Mehrkantansatzes 66, wobei das Führungsstück 27 wiederum durch den Exzenternocken 10 festgehalten wird.

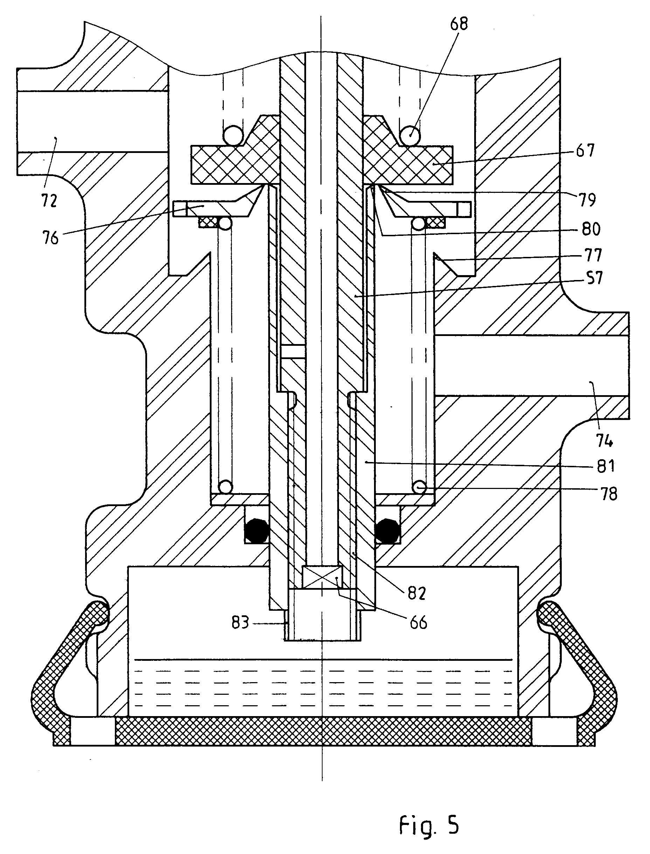

Zu der Höhenbegrenzung 55, deren wesentliche Einzelteile in Fig. 5 nochmals vergrößert dargestellt sind, gehört ein Ventilkörper 67, der auf einer Feder 68 aufgehängt ist und die hohle Steuerstange 57 umgibt. Die Feder 68 ist auf einem Lager 69 abgestützt, welches am Gehäuse 2 mit Hilfe von Querstiften 70 ortsfest gelagert ist. Das Lager 69 ist mit Dichtungen sowohl gegenüber der hohlen Steuerstange 57 als auch gegenüber dem Gehäuse abgedichtet. Damit wird eine Durchströmkammer 71 begrenzt, die Verbindung zu einem Anschluß 72 hat, an der eine Leitung 73 angeschlossen ist. Die Leitung 73 ist von einem Wechselladeventil, also einem Ventil zum willkürlichen Heben und Senken des Fahrzeugaufbaus, insbesondere zu Zwecken des Be- und Entladens an einer Rampe, angeschlossen, wie dies die gattungsbildende DE 37 16 436 zeigt. Andererseits führt vom Gehäuse 2 ein Anschluß 74 über eine Leitung 75 zu den Luftfederbälgen 25. Zu der Höhenbegrenzung 55 gehört weiterhin ein Doppelventilkörper 76, der mit einem gehäusefesten Einlaßsitz 77 ein Absperrventil 76, 77 für die ansonsten offene Verbindung zwischen den Leitungen 73 und 75 bildet. Der Doppelventilkörper 76 ist auf einer Feder 78 gehäuseseitig abgestützt. Die Kraft der Feder 78 ist schwächer bemessen als die Kraft der Feder 68. Der Doppelventilkörper 76 besitzt auf seiner dem Ventilkörper 67 zugekehrten Seite einen Entlastungssitz 79, dessen Durchmesser nur geringfügig größer bemessen ist als ein Entlüftungssitz 80 eines hülsenartigen Fortsatzes 81, der mit Hilfe eines Gewindes 82 relativ zu der hohlen Steuerstange 57 axial verstellbar ist. Der Fortsatz 81 besitzt für eine Verdrehung im Gewinde 82 einen Mehrkantansatz 83. Es ist erkennbar, daß bei festgehaltenem Mehrkantansatz 66 und betätigtem Mehrkantansatz 83 die axiale Lage des Fortsatzes 81 und damit des Entlüftungssitzes 80 verstellt und eingestellt werden kann.

Wichtig ist zu erkennen, daß die Höhenbegrenzung 55 in beiden eingestellten Fahrzeughöhen in gleicher Weise wirksam wird. Anders gesagt wird der maximal zulässige Hub in den Federbälgen 25 bis zum Erreichen der dort vorgesehenen Anschläge in beiden Fahrzeughöhen in gleicher Weise genutzt. Wenn z. B. der Fahrzeugaufbau aus einer der beiden eingestellten Fahrzeughöhen heraus mit Hilfe eines Wechselladeventils willkürlich angehoben wird, so fließt Druckluft über die Leitung 73 in die Durchströmkammer 71 und von dort bei geöffnetem Absperrventil 76, 77 über die Leitung 75 zu den Luftfederbälgen 25, so daß der Fahrzeugaufbau angehoben wird. Dies verursacht eine Verdrehung des Hebels 7 und des Verstelltriebes 6 im Sinne eines Öffnens des Auslaßventils 17, 19. Dieses Öffnen kann jedoch zu keiner Auswirkung an den Luftfederbälgen führen, da dies durch das Wechselladeventil verhindert wird. Dennoch wird mit der Absenkung des Ventilstößels 20 letztlich auch die hohle Steuerstange 57 nach unten mitgenommen, bis schließlich der Doppelventilkörper 76 auf dem Einlaßsitz 77 aufsetzt und damit das Absperrventil 76, 77 schließt. Dies bedeutet, daß eine weitere Druckerhöhung in den Luftfederbälgen 25 nicht möglich ist, weil diese von der Leitung 73 abgeschlossen sind. Tritt dann eine weitergehende Verdrehung des Hebels 7 in der gleichen Richtung ein, beispielsweise verursacht durch die Abnahme einer Last von dem Fahrzeugaufbau, dann öffnet das zwischen dem Entlüftungssitz 80 und dem Ventilkörper 67 gebildete Auslaßventil 67, 80, und die Leitung 75 und damit die Luftfederbälge 25 werden in dem Maße entlüftet, bis das Auslaßventil 67, 80 wieder schließt. Dies geschieht bei maximaler Höhe des Fahrzeugaufbaus über der Fahrzeugachse. Eine weitere Absenkung des Fahrzeugaufbaus in Richtung auf eine vorher eingestellte Fahrzeughöhe geschieht durch entsprechende Entlüftung der Leitung 73 über das Wechselladeventil. Dabei wird die Durchlaßkammer 71 gestuft entlüftet, wobei der Ventilkörper 67 auf der Kreisringfläche zwischen dem Entlastungssitz 79 und dem Entlüftungssitz 80 entlastet wird, so daß der Entlastungssitz 79 geringfügig von dem Ventilkörper 67 abhebt und insoweit ein Druckausgleich zwischen der Durchströmkammer 71 und der Leitung 75 stattfindet. Eine nennenswerte Hysterese wird damit vermieden.

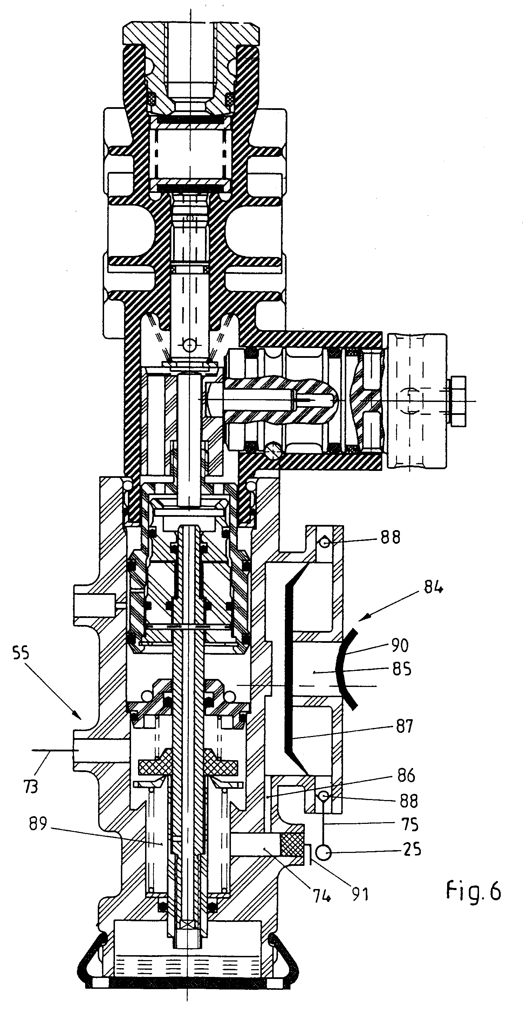

Die Ausführungsform des Niveauregelventils gemäß Fig. 6 entspricht in weiten Bereichen der Ausführungsform der Fig. 4. Auch hier ist eine Höhenbegrenzung 55 vorgesehen, wobei allerdings in der Leitung 75 zu den Luftfederbälgen 25 ein Schnellöseventil 84 eingeschaltet ist. Leitung 73 ist hierbei mit einem Druckluftvorrat verbunden. Der Anschluß 74 mit der Leitung 91 ist hier zum Wechselladeventil geführt. Eine Bohrung 86 führt zu der Membran 87 des Schnellöseventils 84. Das Schnellöseventil 84 besitzt eine eigene Entlüftung 85, über die die Luftfederbälge 25 über Rückschlagventile 88 schnell entlüftet werden, wenn der unterhalb des Doppelventilkörpers 76 befindliche Raum 89 entlüftet wird. Die Entlüftung 85 ist durch ein Flatterventil 90 abgedeckt.

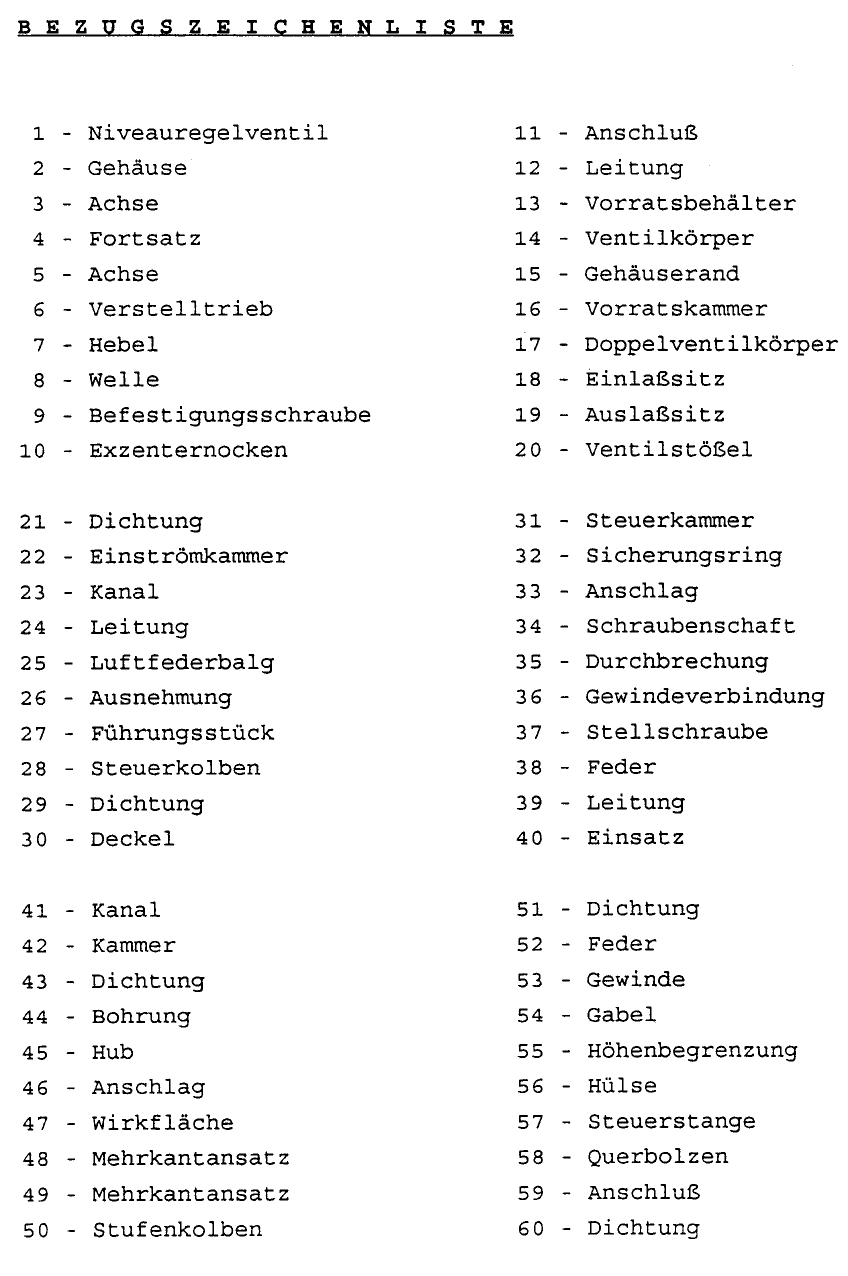

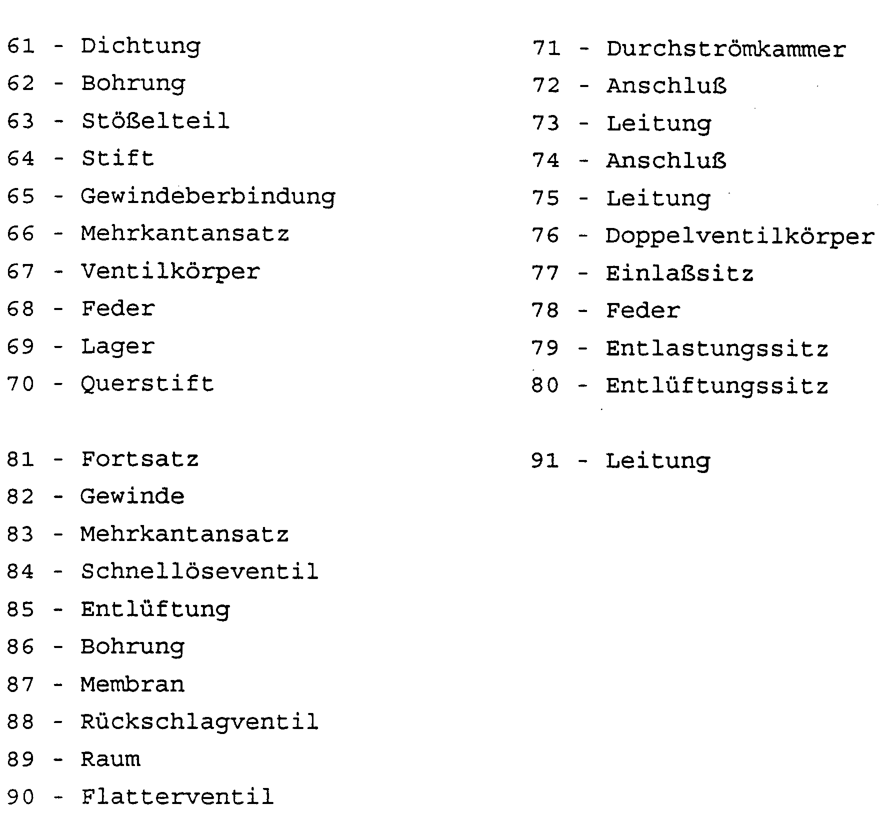

## Patentansprüche

1. Niveauregelventil zum selbsttätigen Konstanthalten der Fahrzeughöhe eines Nutzfahrzeuges mit Luftfederung, mit einem federbelasteten Doppelventilkörper (17), einem Einlaßsitz (18) und einem einen Auslaßsitz (19) für den Doppelventilkörper (17) tragenden und abgedichtet verschiebbaren hohlen Ventilstößel (20), dessen Stellung relativ zum Gehäuse (2) des Niveauregelventils (1) über einen die Fahrzeughöhe abtastenden Verstelltrieb (6) mit Führungsstück (27) und Exzenternocken (10) veränderbar ist, wobei über den Verstelltrieb (6) entsprechend einer Abschlußstellung eine erste Fahrzeughöhe einsteuerbar ist, und mit einem fluchtend zum Ventilstößel (20) vorgesehenen und wahlweise zur Ansteuerung einer zweiten Fahrzeughöhe in einer Steuerkammer (31) beaufschlagbaren Steuerkolben (28), **dadurch gekennzeichnet**, daß die Steuerkammer (31) in dem Führungsstück (27) des Verstelltriebes (6) angeordnet ist, daß der Steuerkolben (28) in dem Führungsstück (27) abgedichtet und begrenzt verschiebbar gelagert ist, so daß bei Einsteuerung auch der zweiten Fahrzeughöhe der Exzenternocken (10) des Verstelltriebes (6) von einer über den Steuerkolben (28) ausgeübten Stellkraft unbelastet bleibt, und daß der Ventilstößel (20) an dem Steuerkolben (28) abgestützt ist.

2. Niveauregelventil nach Anspruch 1, **dadurch gekennzeichnet**, daß das Führungsstuck (27) des Verstelltriebes (6) nach der dem Einlaßsitz (18) abgekehrten Seite verlängert und zu einer Hülse (56) ausgeformt ist, und daß der Steuerkolben (28) in der Hülse (56) gelagert ist.

3. Niveauregelventil nach Anspruch 2, **dadurch gekennzeichnet**, daß die Hülse (56) einen den Hub (45) des Steuerkolbens (28) in der Hülse (56) festlegenden Deckel (30) aufweist.

4. Niveauregelventil nach Anspruch 3, **dadurch gekennzeichnet**, daß der Deckel (30) über ein Gewinde (53) in der Hülse (56) verstellbar und damit der Hub (45) des Steuerkolbens (28) für die Einsteuerung der beiden Fahrzeughöhen einstellbar ist.

5. Niveauregelventil nach den Ansprüchen 1 bis 4, **dadurch gekennzeichnet**, daß zwischen Steuerkolben (28) und Ventilstößel (20) eine Stellschraube (37) zum Einstellen der Abschlußstellung der beiden Fahrzeughöhen vorgesehen ist.

6. Niveauregelventil nach den Ansprüchen 1 bis 4, **dadurch gekennzeichnet**, daß der Steuerkolben (28) und der Ventilstößel (20) eine Baueinheit bilden.

7. Niveauregelventil nach einem oder mehreren der Ansprüche 1 bis 6, **dadurch gekennzeichnet**, daß zur Realisierung einer Höhenbegrenzung (55) eine mit dem Führungsstück (27) verbundene hohle Steuerstange (57) vorgesehen ist, die einen Entlüftungssitz (80) trägt, dem ein ringartiger, die Steuerstange (57) umgebender federnd aufgehängter Ventilkörper (67) zugeordnet ist.

8. Niveauregelventil nach Anspruch 7, **dadurch gekennzeichnet**, daß ein im Gehäuse (2) federnd aufgehängter Doppelventilkörper (76) vorgesehen ist, der mit einem gehäusefesten Einlaßsitz (77) ein Absperrventil (76, 77) für eine zu den Luftfederbälgen (25) führende Leitung (75) und mit dem Ventilkörper (67) ein Vorsteuerventil (67, 79) bildet.

9. Niveauregelventil nach Anspruch 7 oder 8, **dadurch gekennzeichnet**, daß die axiale Lage des Entlüftungssitzes (80) und damit die gemeinsame Höhenbegrenzung (55) relativ zu der Steuerstange (57) über ein Gewinde (82) einstellbar ist.

10. Niveauregelventil nach einem oder mehreren der Ansprüche 3 bis 9, **dadurch gekennzeichnet**, daß zwischen dem Führungsstück (27) und der Hülse (56) eine Gewindeverbindung (99) vorgesehen ist, und daß die Steuerstange (57) mit dem Deckel (30) und der Hülse (56) drehfest verbunden ist.

## Claims

1. A levelling valve for automatically keeping the vehicle height of a commercial vehicle with air suspension constant, the levelling valve comprising a spring loaded double valve body (17), an inlet seat (18), a hollow control rod (20) carrying an outlet seat (19) for the double valve body (17), the outlet seat (19) being movable towards sealed engagement with said double valve body (17), the position of the control rod (20) with respect to the housing (2) of the levelling valve (1) being changeable by means of an actuation drive (6) having a guiding member (27) and an eccentric follower (10), and being responsive to the change in vehicle height, a first vehicle height according to a closing position may be controlled by the actuation drive (6), and a control piston (28) being located in a control chamber (31) in alignment with the control rod (20) and being biasable for alternatively attaining a second vehicle height, **characterized in** that the control chamber (31) is located in the guiding member (27) of the actuation drive (6), in that the control piston (28) is arranged sealingly and limitedly slidingly in the guiding member (27), so that during adjustment to the second vehicle height the eccentric follower (10) of the actuation drive (6) is not loaded by a force acting on the control piston (28), and in that the control rod (20) is supported on the control piston (28).

2. The levelling valve of claim 1, **characterized in** that the guiding member (27) of the actuation drive (6) is extended into the direction opposite to the inlet seat (18) and formed as a sleeve (56), and in that the control piston (28) is arranged in the sleeve (56).

3. The levelling valve of claim 2, **characterized in** that the sleeve (56) comprises a cover (30) defining the stroke (45) of the control piston (28) in the sleeve (56).

4. The levelling valve of claim 3, **characterized in** that the cover (30) is adjustably positioned in the sleeve (56) by a thread (53) and thus the stroke (45) of the control piston (28) for the adjustment to the two vehicle heights is adjustable.

5. The levelling valve of claims 1 to 4, **characterized in** that an adjustment screw (37) is provided between the control piston (28) and the control rod (20) for the adjustment to the closing position of the two vehicle heights.

6. The levelling valve of claims 1 to 4, **characterized in** that the control piston (28) and the control rod (20) form a common unit.

7. The levelling valve of one or several of claims 1 to 6, **characterized in** that a hollow actuation rod (57) connected to the guiding member (27) is provided in order to realize a height limitation (55), the hollow actuation rod (57) having a vent seat (80) to which an annular spring loaded valve body (67) surrounding the actuation rod (57) is assigned.

8. The levelling valve of claim 7, **characterized in** that a spring loaded double valve body (76) is positioned in the housing (2), the double valve body (76) together with an inlet seat (77) fixed in the housing (2) forming a closing valve (76, 77) for a conduit (75) leading to the suspension bellows (25), and together with the valve body (67) forming a pilot valve (67, 79).

9. The levelling valve of claim 7 or 8, **characterized in** that the axial position of the vent seat (80) and thus the common height limitation (55) is adjustably arranged by a thread (82) with respect to the actuation rod (57).

10. The levelling valve of one or several of claims 3 to 9, **characterized in** that a thread connection (65) is provided between the guiding member (27) and the sleeve (56), and in that the actuation rod (57) with the cover (30) is connected to the sleeve (56) in torsiolanally fixed relation.

## Revendications

1. Soupape de régulation de hauteur pour maintenir automatiquement constante la hauteur d'un véhicule utilitaire à suspension pneumatique, comportant un corps de soupape double (17) soumis à l'action d'un ressort, un siège d'entrée (18) et un poussoir de soupape (20) creux portant un siège de sortie (19) pour le corps de soupape double (17) et pouvant coulisser de manière étanche, dont la position par rapport au boîtier (2) de la soupape de régulation de hauteur (1) est variable au moyen d'un mécanisme de réglage (6) palpant la hauteur du véhicule, avec pièce de guidage (27) et came excentrique (10), une première hauteur du véhicule pouvant être commandée par l'intermédiaire du mécanisme de réglage (6), suivant une position finale, et comportant un piston de commande (28) prévu aligné avec le poussoir de soupape (20) et pouvant être sollicité au choix en vue de la commande d'une deuxième hauteur du véhicule dans une chambre de commande (31), caractérisée en ce que la chambre de commande (31) est située dans la pièce de guidage (27) du mécanisme de réglage (6), en ce que le piston de commande (28) est rendu étanche dans la pièce de guidage (27) et est monté de manière à pouvoir coulisser dans une mesure limitée, de sorte que lors de la commande de la deuxième hauteur du véhicule aussi, la came excentrique (10) du mécanisme de réglage (6) reste non sollicitée par une force de réglage exercée par le piston de commande (28), et en ce que le poussoir de soupape (20) prend appui contre le piston de commande (28).

2. Soupape de régulation de hauteur selon la revendication 1, caractérisée en ce que la pièce de guidage (27) du mécanisme de réglage (6) est prolongée vers le côté tourné à l'opposé du siège d'entrée (18) et est formée en un manchon (56), et en ce que le piston de commande (28) est monté dans le manchon (56).

3. Soupape de régulation de hauteur selon la revendication 2, caractérisée, en ce que le manchon (56) présente un couvercle (30) définissant la course (45) du piston de commande (28) dans le manchon (56).

4. Soupape de régulation de hauteur selon la revendication 3, caractérisée en ce que le couvercle (30) est réglable au moyen d'un filetage (53) dans le manchon (56) et la course (45) du piston de commande (28) est ainsi réglable pour la commande des deux hauteurs du véhicule.

5. Soupape de régulation de hauteur selon les revendications 1 à 4, caractérisée en ce qu'entre le piston de commande (28) et le poussoir de soupape (20) est prévue une vis de réglage (37) pour le réglage de la position finale des deux hauteurs du véhicule.

6. Soupape de régulation de hauteur selon les revendications 1 à 4, caractérisée en ce que le piston de commande (28) et le poussoir de soupape (20) forment une unité de construction.

7. Soupape de régulation de hauteur selon une ou plusieurs des revendications 1 à 6, caracterisée en ce que pour réaliser une limitation de hauteur (55), il est prévu une tige de commande (57) creuse, reliée à la pièce de guidage (27), qui porte un siège de désaération (80), auquel est associé un corps de soupape (67) du type anneau, suspendu de manière élastique, entourant la tige de commande (57).

8. Soupape de régulation de hauteur selon la revendication 7, caractérisée en ce qu'il est prévu un corps de soupape double (76), suspendu de manière élastique dans le boîtier (2), qui forme avec un siège d'entrée (77) solidaire du boîtier, une soupape d'arrêt (76, 77) pour une conduite (75) menant aux soufflets de ressort pneumatique (25), et avec le corps de soupape (67), une soupape pilote (67, 79).

9. Soupape de régulation de hauteur selon la revendication 7 ou 8, caractérisée en ce que la position axiale du siège de désaération (80) et donc la limitation de hauteur (55) commune est réglable par rapport à la tige de commande (57), au moyen d'un filetage (82).

10. Soupape de régulation de hauteur selon une ou plusieurs des revendications 3 à 9, caractérisée en ce qu'il est prévu un assemblage fileté (99) entre la pièce de guidage (27) et le manchon (56), et en ce que la tige de commande (57) est reliée solidairement en rotation avec le couvercle (30) et le manchon (56).
